# EUROPEAN PATENT APPLICATION

(11) **EP 1 424 007 A1**
(43) Date of publication of application: **02.06.2004**
(21) Application number: 02079999.5
(22) Date of filing: 28.11.2002
(51) Int. Cl.: A01N 63/00

(54) **Method for preparation, preservation and application of biological control agents**

(71) Applicant: NEDERLANDSE ORGANISATIE VOOR TOEGEPAST-NATUURWETENSCHAPPELIJK ONDERZOEK TNO, 2628 VK Delft (NL)
(72) Inventor: Wieger, Knol, 3708 BT Zeist (NL)
(74) Representative: Prins, Adrianus Willem, Mr. Ir.

(57) **Abstract**

The invention relates to the preservation and application of biological control agents comprising microorganisms. The invention further relates to a method for preparing a biocontrol agent and to a composition prepared according to said method and use thereof. Another aspect of the invention relates to the improvement of plant productivity by making use of a composition according to the invention.

## Description

The invention relates to the preparation, preservation and application of biological control agents comprising microorganisms.

The detrimental effects of pests and pathogens on the productivity of plants in horticulture and agriculture have for long been controlled by using chemicals such as fungicides and other pesticides. Although the effectiveness of chemical pesticides in controlling pests is undisputed, their use is becoming increasingly unpopular due to the associated human health and environmental hazards.

To register a pesticide's active ingredient or a pesticide product, pesticide manufacturers must submit scientific data on pesticide toxicity and behavior in the environment to the registering authority. Data from any combination of more than 100 different tests may be required, depending on the toxicity and degree of exposure. To register a pesticide for use on food, it is required that applicants identify analytical methods that can be used to determine the amount of pesticide residue remaining on crops and in food products. Further, a tolerance (or "safe" level of pesticide residue) must be established before a pesticide registration may be granted.

Alternative methods for pest control that do not make use of chemicals are so called biological pest control methods or shortly, biocontrol methods. In horticulture and agriculture, four such methods are used, including modification of host populations (*e.g.*, breeding of resistant plant populations), modifications of the reservoirs of pathogens (*e.g.*, heat sterilization of soils or seeds to remove pathogens), modification of the vector populations (*e.g.*, control of aphids that serve as vector for viral plant diseases) or application of biocontrol agents on the crops that contain microbial amensals or parasites (*e.g.*, use of *Bacillus thuringiensis* preparations to control pest insects on agricultural crops and forest trees).

Biocontrol agents comprise living organisms, mostly microorganisms, that interfere with the ability of the disease-causing organism (pathogen or pest) to grow and/or survive on the crop, thereby improving plant productivity. Fungal and bacterial biocontrol microorganisms are presently the most common. The mechanisms by which pathogens are attacked are usually amensalism (also called antagonism or antibiosis, which comprises the secretion of pathogen-inhibiting metabolites) and competition (for nutrients or space). Also, the biocontrol microorganisms may have an effect on the plant by making it more resistant and less prone to disease.

In agricultural and horticultural practice of biocontrol, plants or plant components such as seeds, flowers, fruits, leaves, stems and roots are inoculated by e.g. spraying (e.g. of leaves), dipping (e.g of fruits) or mixing (e.g of seeds) with a biocontrol agent that comprises a suspension of a living biocontrol microorganism (inoculant),.

The use of biological agents in the control of pests in horticulture provides important advantages over the use of chemical substances. Such advantages are well documented, *e.g.*, by J.M. Whipps in the article entitled "Status of biological disease control in horticulture" (Biocontrol Sci & Technol (1992) Vol. 2:3-24), the content of which is incorporated herein by reference.

Other advantages of biocontrol agents include reduced threat of phytotoxicity and pathogen resistance. Regulatory agencies now encourage their use by easing their registration.

International patent application 94/19950 describes some aspects of preparing a biological control agent with anti-fungal activity that may be readily accepted by regulatory authorities and by the public. In this case, the biological control agent is prepared from a starter culture of Sourdough-derived microbial strains including regular bread yeasts and lactic acid bacteria. The starter culture that was used to start a fermentation was subsequently applied to the test-fruits by dipping in the culture broth. Under field-conditions, such fermentation prior to application of the biocontrol agent is undesired since farmers typically do not have the required skills or possibilities. Moreover dipping of individual fruits in the pre-harvest period is impractical if not impossible and regular spaying is mostly preferred.

But apart from this practical problem, biocontrol agents according to the prior art have several important disadvantages over chemical agents, mainly due to the characteristics of the microorganisms themselves. Important disadvantages of biological control agents relative to chemical agents are
- higher costs
- reduced effectiveness
- narrower action (only active towards specific pests)
- susceptibility to environmental conditions
- rapid reduction in potency of the inoculates over time
- inconsistent dosage due to instability
- continuous need for freshly prepared inoculates
- requirement of multiple administrations/applications
- slow establishment of effect (*e.g.*, disease in pest population)
- susceptibility to beneficial adjuvants such as surfactants and spreaders.

The ability of a biocontrol microorganism to form spores greatly enhances its applicability in a biocontrol agent. Such spores are very resistant to environmental stress, maintain their infectivity for very long periods, germinate often synchronic to pest population development and require only sporadic application. However, an important disadvantage of using spore-formulations is the relatively slow establishment of effect since the microorganism is not metabolically active and field conditions may be altogether unfavorable for germination, *e.g.*, dry conditions may prevail.

Several non-sporulating microorganisms also have limited prospects of use in biological control programs because of storage difficulties and environmental instability of the inoculum. It is an important drawback of all non spore-forming biocontrol microorganism that, when used in biocontrol agents, they produce a biocontrol agent with a limited shelf life. If biocontrol agents are stored too long or under unfavorable conditions the viability of the individual cells in the preparation will decrease rapidly, which results in a loss of the pest controlling abilities of the agent. Viability is the ability of cells to propagate, and is often tested by counting colony forming units after incubation of a cell suspension on solid growth media.

In general, equal criteria are applied for chemical and biological agents for crop pest control with respect to handling and storage. A shelf life of one year at room temperature is desired. However, most products that contain living microorganisms will deteriorate upon storage without protective measures, either by starvation, lysis or outgrowth of microbial contaminants. Several formulations of crop inoculants have been proposed in an attempt to overcome problems with loss of viability and inconsistent dosage. These methods involve drying, freeze-drying and entrapment of living cells in various (bio)polymers, such as polyacrylamide (Dommergues et al., Appl. Environ. Microbiol., 37:779-81, 1979), xanthan and carob gums (Mugnier et al., Appl. Environ. Microbiol., 50:108-114, 1985) and alginate (Bashan, Appl. Environ. Microbiol., 51:1089-98, 1986; Fages, Appl. Microbiol. Biotechnol., 32:473-78, 1990), but a great part of the microorganisms will still not survive long storage periods. Even when kept refrigerated or frozen, micro-organism preparations ready for application will rapidly lose their potency.

Although the entrapment of microorganisms in (bio)polymers may increase the concentration and stability of inoculants, the production of such inoculants often involves multiple steps and requires specialized equipment. Such methods are time-consuming and can be expensive. Moreover, bacteria entrapped in alginate beads may not adhere well to plant components, and therefore, may not be optimally suitable for use as a biocontrol agent. The agricultural industry would clearly benefit from a simple, less expensive method of providing microbial inoculants for plants, seeds and soil.

The addition of specific stabilizing adjuvants to biocontrol formulations has the disadvantage that it leaves residue on the leafs. In general, biocontrol agents may contain several such adjuvants like surfactants that will improve initial uniform spray deposition, effectuate increased foliar redistribution and improve retention and weatherability (resistance to rewetting and removal by rain). Additionally, adjuvants used in aircraft or ground equipment application may include binders and dispersants, also called spreaders, designed specifically for use in concentrated and low-volume sprays. The use of such adjuvants is not preferred and if required they are favorably of natural, e.g. plant, origin.

In order to make biocontrol agents more acceptable to the end users, economically more attractive and easier to use, the agent should have a long shelf life, contain minimal amounts of adjuvants, leave no product residues on leaves or flowers and be available when needed and not requiring bulk production by starter incubation.

Soil bacteria like *Pseudomonas* spp. and *Rhizobium* spp. can be stored from active cultures and stored as a concentrated suspension in sterile distilled water at ambient temperatures. They remain viable in a physiologically dormant state for a long time. However, this formulation is not suitable for application in biocontrol agents for which fast action is required.

The present invention provides a method for the production of biological control agents that can instantaneously be used for application on crops, plants and plant components after dilution in a bulk dilutant where upon application the agent is active. The present invention provides a method for preparing a biocontrol agent comprising a first step of preparing a long-shelf-life intermediate composition comprising biomass of at least one biocontrol microorganism and a second step of preparing from said intermediate composition an end composition for direct application of said biocontrol agent to agricultural or horticultural crops. Preferably, said method further comprises storing said long-shelf-life intermediate composition in a frozen state. Microorganisms that can be applied with great benefit include lactic acid bacteria (such as *Lactobacillus* spp., *Streptococcus* spp. and *Leuconostoc* spp.), fungi (such as *Aureobasidium* spp., *Trichoderma* spp., *Aspergillus* spp., and *Gliocladium* spp.), and yeast (such as *Candida* spp. and *Saccharomyces* spp).

Preferably, said microorganism comprises an *Aureobasidium* species. This micro-organism is fast acting and typically though not necessarily requires repeated application after a week if the problem (disease) is not yet completely under control. In a particularly preferred embodiment, said microorganism comprises an *Aureobasidium pullulans* strain.

In a preferred embodiment of the invention, the long-shelf-life intermediate composition is stored in separate containers containing an amount of said biomass sufficient for a fixed amount of end composition. Various types of containers can be applied such as for instance tubes, flasks, pouches and sachets. Preferably, said container has an appropriate size, like for instance 100 ml. The containers also may have larger sizes like 1000 ml or more for the sake of application of the biomass at larger volumes. The containers preferably are filled with biomass using industrial filling equipment like automated liquid-dosing systems, similar or comparable to automated systems used in food or pharmaceutical industries. The biomass is dosed from a larger batch amount which has been pretreated for example by, but not limited, to physical means like concentration or evaporation or by addition of formulating, stabilizing, frost-protection or dispersing compounds. After filling of the containers, they are cooled and frozen to start the long term storage period as described by this invention. The freezing system may consist of a rapid freezing street, through which the containers are transported or they may be subjected to a computer-controlled freezing program. From the moment of freezing, the containers are kept frozen during storage, transport and redistribution to users and storage at the user until actually being used.

Preferably each container comprises an amount of biomass suitable for a fixed amount of spraying liquid. In this way farmers need only to determine the amount of end composition or spraying liquid needed, and use the suitable number of containers to prepare said end composition or liquid. Preferably the amount of biomass in a container is sufficient for between 50 and 200 liter end composition or spraying liquid. More preferably, the amount is sufficient for 100 liter end composition or spraying liquid. Preferably, a container comprises between 10⁹ and 10¹³ cells. More preferably a container comprises between 10¹⁰ and 10¹² cells. In a particularly preferred embodiment a container comprises approximately 10¹¹ cells. Ready to use containers have the advantage that no measuring is required by inexperienced personnel. Moreover, no thawing and refreezing of bulk material is required, thus preventing unnecessary viability losses. An end composition may comprise any substance compatible with said microorganism. Preferably, said end composition is made by diluting said intermediate composition. Preferably, said dilution is performed in water.

Agricultural or horticultural crops in the present invention are understood to include, but are not limited to, vegetables (e.g., tomato, cucumber), and ornamentals (e.g., Rose, St. Paulia, Cyclame), respectively.

In a preferred embodiment of the invention a long-shelf-life intermediate composition is prepared by a method comprising the steps of:
a) preparing a biomass of at least one biocontrol microorganism by cultivation,
b) harvesting said biomass of said at least one biocontrol microorganism in a first dilutant to obtain a biomass suspension, and
c) freezing said biomass suspension,
The end composition for direct application is preferably prepared by the steps of:
d) thawing said long shelf-life intermediate composition, and
e) diluting said long shelf-life intermediate composition in a second dilutant prior to application, wherein said first and second dilutant may be the same or different. In a preferred embodiment said biomass suspension is frozen in separate containers. Preferably, said containers each contain an amount of biomass suspension suitable for a fixed amount of spraying liquid. In this way farmers need only to determine the amount of spraying liquid and use the suitable number of containers for the amount of liquid. Preferably the amount of biomass suspension in a container is sufficient for between 50 and 200 liter spraying liquid. More preferably, the amount is sufficient for 100 liter spraying liquid. Preferably, a container comprises between 10⁹ and 10¹³ cells. More preferably a container comprises between 10¹⁰ and 10¹² cells. In a particularly preferred embodiment a container comprises approximately 10¹¹ cells. Ready to use containers have the advantage that no measuring is required by inexperienced personnel. Moreover, no thawing and refreezing of bulk material is required, thus preventing unnecessary viability losses.

In a preferred embodiment said long shelf-life intermediate composition is stored in a frozen state for a period of time. Preferably, it is frozen for at least a week, more preferably for at least one month. In a particularly preferred embodiment said long shelf-life intermediate composition is stored in a frozen state for a period of at least 6 months or more preferably 1 year. In this embodiment of the invention it is preferred that microorganisms are used that are resistant to freezing for long periods of time. A preferred microorganism for this embodiment comprises a *Aureobasidium species.* More preferably, a *Aureobasidium pullulans* strain. The present invention shows that particularly this strain is suitable for long term storage in a frozen state, while maintaining its high viability and fast acting characteristics. Strains of the *Aureobasidium* have been found to be so resilient that long term storage can be achieved in hostile solutions such as distilled water.

Suitable amounts of biomass of the biocontrol microorganism can be grown on solid media, such as agar media. It is generally more efficient to cultivate the biomass in liquid culture, such as in shake flasks. Biomass can be grown with great advantage in fermenters. The growth conditions in such fermenters can be controlled allowing for higher (growth substrate) yields and thus higher densities (i.e., .about.10.sup.9 cells/ml) of the microorganisms. The pH in the fermenter can be controlled and, depending on the biocontrol microorganisms grown, can be set anywhere in a range from pH 3 to pH 10. The pH as well as the growth temperature may either be optimized to provide maximum biomass yield during cultivation, or to provide maximum biocontrol effect when the organism are inoculated on the plants. Some adjuvant can improve the viability of the cells, examples are protectants against freezing and thawing damage or damage due to differences in osmotic pressure (sugars, sugar-alcohols and sometimes proteins). *In vitro* growth conditions that deviate from optimal growth conditions are likely to bear more resemblance to the natural conditions, thus making the microorganism more resilient. Generally the pH will vary from 5 to 9, and the temperature during cultivation will be set to a constant value between 20 and 40°C.

The biocontrol microorganisms can be cultivated in pure-culture, but they may also be grown in a co-culture of two or a mixed culture of more than two different organisms. They can be classified, known organisms, or they can be unidentified field isolates or the culture may comprise a complex mixture of unknown composition. A suitable biocontrol microorganism may be any type of microorganism that is detrimental to the growth of a plant pathogen. It may be parasitic to plant pathogens or it may exhibit specific abilities to be antagonistic or competitive to plant pathogens. The biocontrol microorganism may exude growth inhibiting substances such as bacteriocins to inhibit the growth of the pathogen. Other microorganisms that may be included in the biocontrol agent may be synergistic organisms that support the growth of the specific biocontrol microorganisms. Alternatively, these microorganism may produce substances that are advantageous natural adjuvants in the biocontrol agent, such as adhesive substances like polysaccharide materials. As such, these microorganisms are also understood to comprise biocontrol microorganisms. Biocontrol microorganisms may be fungi, yeast, bacteria, archaea, algae, slime molds and/or protozoa. They are preferably in the from of vegetative cells, yeast-like conidia-like structures, germinating spores, dormant spores, mycelia or any phenotype of the microorganisms. In a preferred embodiment according to the invention, the biomass of biocontrol microorganisms is in a growth phase of vegetative cells. Once grown to sufficient densities, the biomass of biocontrol microorganisms is harvested by separating it from the growth medium. Cells can be harvested by filtration or centrifugation or by any method known to the skilled artisan. The biomass may be washed before providing the relevant dilutant. In a preferred embodiment said microorganism comprises *Aureobasidium pullulans.* Cultures of *Aureobasidium,* preferably *A. pullulans,* are preferably grown in medium containing protein building blocks generated by digestion of an animal protein source. This may be supplemented with protein building blocks from other sources. Under these conditions yield of biomass is very much improved over use of other sources of protein building blocks. Typical protein building blocks are amino-acids and peptides. Under these conditions the conidia content is improved. Mycelium like particles are reduced. A high conidia content leads to improved performance as a biocontrol agent of the invention.

For preparing the long shelf-life intermediate product, the mass of cells is suspended in a first dilutant by methods known to the art. The first dilutant is preferable sterile, and may comprise water, such as distilled water, as a basic ingredient. Additionally, the first dilutant may comprise antioxidant, nutrient, buffer, preservative, stabilizer, cryoprotectant or osmoprotectant. Such additive may comprise salts, such as alkali metal chloride salts (e.g., sodium chloride, potassium chloride, etc.), alkali or alkaline earth metal phosphate salts (e.g., disodium hydrogen phosphate, potassium dihydrogen phosphate, etc.), osmo- and/or cryoprotectants (e.g., trehalose, mannitol, glycerol, etc.), anti-oxidants, (e.g., serum albumin, dimethyl sulfoxide, vitamin C, polyphenols, flavonoids, selene, etc.), monosaccharides (e.g., glucose), biopolymers (sodium alginate, dextran, xanthan, arabic gum, etc.), alone or in combinations. All such additives may improve viability of the cells in the first dilutant and during (long-term) storage and may serve as viability preserving substances. A long shelf-life intermediate composition according to an embodiment of the invention may comprise one or more such viability preserving substances. Before further processing or storage, the long shelf-life intermediate composition is preferably frozen. Freezing of a cellular suspension in water is an uncommon practice in case that intact, viable cells are to be recovered, but reveals several surprising advantages. Usually, the freezing of microbial cultures is believed to be detrimental to the overall viability of the culture. Freeze-thawing cycles are often used in the lysis of cells and isolation of, e.g., DNA from the cytoplasma. The present inventors have surprisingly found that the frozen and subsequently thawed cell suspension exhibits no detrimental reduction in viability, while several beneficial qualities for commercial application, including proper adhesion to surfaces without adjuvant supplementation, were preserved. As mentioned above, said biomass is preferably stored by diluting said biomass in water and subsequently freezing the obtained suspension. In a preferred embodiment the biomass is grown in the presence of elevated amounts of biodegradable cryoprotectant. This has the effect that the biomass is at least in part protected against freezing damage when water is used as first dilutant. In this embodiment it is preferred that said biomass is obtained through culture of *Aureobasidium,* preferably *Aureobasidium pullulans.* These yeast-like fungi exhibit pronounced cryoprotection. In this embodiment it is preferred that said cryoprotectant comprises glycerol.

Further, the freezing step can easily be extended for long periods thereby providing a convenient prolonged storage method. The thus frozen intermediate composition may be stored for extended periods of time before being thawed and used as an ingredient of the end composition. As an additional benefit, thawing of the frozen suspension and dilution in a second dilutant now provides a convenient bulk preparation method, without the need for additional incubations. The thawed cell suspension that is diluted to bulk volume in the second dilutant represent the end composition of the biocontrol agent according to the invention and is ready for direct application as an inoculant to horticultural and agricultural crops.

Thawing of the frozen cell-suspension according to the invention may be achieved by heating or simply by storage at room temperature for a period long enough to thaw the suspension completely. Preferably, the cell-suspension is thawed in warm water at a temperature of around 25 °C under gentle shaking. In a preferred embodiment a stored container is opened and mixed directly with the second dilutant.

For preparing the end composition for direct application, the thawed cell suspension is mixed with a second dilutant by methods known to the art. The second dilutant is preferable tap water. The mixing proportion of cell suspension:second dilutant may be between 1:10 and 1:10,000. Preferably the mixing proportion is 1:500 to 1:5,000. Most preferably, this proportion is 1:1,000.

Additionally, the second dilutant may comprise salts, such as alkali metal chloride salts (e.g., sodium chloride, potassium chloride, etc.), alkali or alkaline earth metal phosphate salts (e.g., disodium hydrogen phosphate, potassium dihydrogen phosphate, etc.), osmo-protectants (e.g., mannitol, glycerol, etc.), anti-oxidants, (e.g., dimethyl sulfoxide, vitamin C, polyphenols, flavonoids, selene, etc.), monosaccharides (e.g., glucose), biopolymers (sodium alginate, dextran, xanthan, arabic gum, etc.), alone or in combinations. All such additives may improve viability of the cells in the second dilutant and comprise viability preserving substances. An end composition according to an embodiment of the invention may comprise one or more such viability preserving substances.

Further, the second dilutant may comprise adjuvants such as anti-oxidants, binders, dispersants, emulsifiers, stabilizers, chelators, humictants, stickers, thickeners and/or germination stimulating compounds to improve the quality of the biocontrol agent. Alternatively, these quality improving adjuvants may be added to the first dilutant or after the addition of the thawed cell suspension to the second dilutant.

Additionally to the second dilutant may be added other co-applied biocontrol agents, growth regulators and/or micronutrients.

It is an aspect of the present invention to provide methods for preparing a biocontrol agent. It is also an aspect of the present invention to provide compositions comprising a biocontrol agent obtainable by a method of the invention. It is another aspect of the present invention to provide such a biocontrol agent prepared according to a method of the invention. It is yet another aspect of the present invention to use the biocontrol agent for control of pests in agricultural setting. The biocontrol agent according to the present invention may comprise one or more biocontrol microorganisms and may be used for controlling, treating and/or preventing growth of pest organisms on and/or in plants. For that purpose, a plant or plant component is contacted with a composition comprising a biocontrol agent according to the invention. Preferable, such compositions comprise the end composition for direct application of said biocontrol agent to agricultural and/or horticultural crops.

Said contacting of the plant and/or plant component with a composition according to the invention may be effectuated by spraying, either by using hand sprayers, concentrate (tractor) or aircraft sprayers, sprinkling irrigating or other irrigating means, dipping or any other mode of applying known to the art said plant component with said composition.

A biocontrol agent according to the invention can be applied with great benefit for the control of *Botrytis* related diseases, preferably in green house cultures. In a preferred such embodiment, the biocontrol agent comprises an *Aureobasidium* species as a biocontrol microorganism. In a more preferred such embodiment said biocontrol organism is an *Aureobasidium pullulans* strain.

It will be apparent to the skilled artisan that other methods may be used within the scope of the invention for preparing compositions comprising other types of organisms and other adjuvant materials. It is to be understood that other such methods are within the scope of the instant invention as defined by the claims.

### Examples

### Example 1. Production, harvesting, processing and storage of Aureobasidium pullulans biomass

Production of biomass *of Aureobasidium pullulans* was carried out in a 5-litre fermenter (New Brunswick). Medium composition was as follows: glucose (20 g/l), glycerol (92 g/l), yeast extract (1 g/l) and proteose peptone (Difco 21193, 10 g/l) in demineralized water. The fermentation was inoculated with the cells of a 140 ml shake flask culture with the same medium. Fermentation conditions were: stirrer speed 200 RPM; aeration rate 0.5 l / min; temperature 30°; control of pH at 5.5; dissolved oxygen DO >20% saturation). Growth data are given in the following table.

| Fermentation time | Cell density (optical density at 660 nm) |
|---|---|
| 0 | 0.30 |
| 6 | 0.63 |
| 11 | 1.37 |
| 24 | 5.06 |
| 26 | 5.76 |
| 48 | 5.76 |

After 48 hours the cell number was 1.4 x 10⁷/ml (microscopic count). The biomass was harvested, centrifuged, washed, resuspended in sterile demineralised water (microscopic count 1.8 x 10⁷/ ml) and divided over a number of vials. The vials were stored in a freezer at -20 °C.

At certain time intervals a vial was taken from the refrigerator, thawed and colony forming units (CFU) of the contents were counted on Potato Dextrose Agar.

Data are given in the table below. In average the calculated survival rate is 50 %, but varies between 21-136, which may be due to inhomogeneity of the suspension. After 10 months still 39 % survival is shown.

| Time interval | Colony forming units (CFU / ml) |
|---|---|
| Direct | 1.4 x 10⁷ |
| 1 week | 1.9 x 10⁷ |
| 2 weeks | 3.0 x 10⁶ |
| 3 weeks | 3.7 x 10⁶ |
| 4 weeks | 3.7 x 10⁶ |
| 10 months | 5.5 x 10⁶ |

### Example 2. Improved yield of Aureobasidium pullulans biomass in shake flask cultures.

Two shake flask cultures, each containing 100 ml of the fermentation medium of example 1 were inoculated with *Aureobasidium pullulans* and incubated for 2 days at 30°C. In each flask another type of proteose peptone was used. As shown in the table below a much higher density (i.e. more biomass) was obtained when proteose peptone, Difco 211684, was used in the growth medium.

| Type of proteose peptone | Proteose peptone Difco 211684 Digest of animal protein | Proteose peptone, nr 3 Difco 21193 Digest of protein |
|---|---|---|
| Growth characteristics after 2 days | | |
| - pH | 4.76 | 5.84 |
| - density (expressed as OD 610 nm) | 4.7 | 0.74 |
| - morphology | many conidia-like cells | mycelium particles, few conidia-like cells |

### Example 3. Improved production, harvesting, processing and storage of Aureobasidium pullulans biomass for glasshouse trials

Production *of Aurobasidium pullulans* biomass was carried out in a 5-liter fermenter under almost similar conditions as described for example 1. Proteose peptone, Difco 211684, was used in the medium. Data of the fermentation are given in the table below.

| Fermentation time (h) | O₂ in offgas (%) | CO₂ in offgas (%) | Density (OD 610 nm) | Glucose (%) | Microscopic count (cells/ml) |
|---|---|---|---|---|---|
| 0 | 20.7 | 0 | 0.11 | - | - |
| 7 | 20.0 | 0.6 | 0.61 | - | - |
| 22 | 12.8 | 8.8 | 12.3 | 1.5 | 1.6 x 10⁸ |
| 24 | 12.3 | 8.9 | 15.5 | 1.0 | - |
| 26 | 12.4 | 8.5 | 18.0 | 0.8 | 2.5 x 10⁸ |
| 27 | 12.4 | 8.4 | 19.3 | 0.8 | - |

The biomass was harvested after 28 hours. CFU and microscopic counts of the culture were then 1.6 x 10⁸ and 2.5 x 10⁸ per ml respectively, indicating 64 % viability of the cells. The biomass was centrifuged, washed, resuspended in sterile demineralised water en divided over 10 tubes, each containing 50 ml of the suspension. The tubes were frozen and stored at -20°C. After thawing CFU and microscopic counts of the suspension were 1.4 x 10⁹ and 2.4 x 10⁹ respectively, indicating 58 % viability.

The obtained frozen suspensions were applied in a glasshouse trial. Weekly, thawed suspension was diluted and used for spraying cucumber plants. After thawing the contents and taking out some of the suspension the tubes were refrozen. CFU-counts of the thawed suspensions have been determined during the glasshouse experiments and are given below. In average the calculated survival rate amounts 77 %, but the figures are varying considerably (between 350 and 1 %). This is probably due to inhomogenity of the suspensions. It appeared that re-freezing does not greatly affect the survival rate.

| Storage time (weeks) | Cell number after thawing (CFU / ml) |
|---|---|
| 2 | 2.3 x 10⁹ |
| 3 | 4.9 x 10⁹ |
| 4 | 3.0 x 10⁹ |
| 5 | 1.7 x 10⁷ |
| 6 | 7.4 x 10⁸ |
| 7 | 4.2 x 10⁸ |
| 8 | 9.5 x 10⁸ |
| 9 | 6.7 x 10⁸ |
| 10 | 6.2 x 10⁷ |
| 11 | 3.8 x 10⁸ |
| 12 | 1.2 x 10⁹ |
| 13 | 8.0 x 10⁸ |
| 14 | 1.0 x 10⁹ |
| 15 | 5.9 x 10⁷ |
| 30 | 5.9 x 10⁸ |
| 41 | 1.8 x 10⁸ |

### Example 4. Storing of Verticillium biguttatum in the freezer with and without protectants

When *Verticillium biguttatum* spores, a powerful crop protection agent against *Rhizoctonia solani* in potatoes, with a concentration in water of 25 x 10⁸/ml are stored in the freezer at -40°C in the presence of cryoprotectants like milkpowder (12wt%), threhalose (7wt%) and sorbitol (7wt%) only 4-7% of the spores survived after 24 hrs. Better results were obtained using no protectant at all but germination after storing for one day in the freezer still dropped to 23%. For practical and commercial applications, spores of *V. biguttatum* need to be stored in concentrations of at least 10⁹/ml.

When much more diluted spore concentrations of *V. biguttatum* are stored, survival proved to be much better. Starting with a concentration of only 5.5 x 10⁷ survival after one week dropped to 55% and after storing for 8 weeks to 23%. These numbers are similar to the survival of *A. pullulans* when stored during freezing.

## Claims

1. Method for preparing a biocontrol agent comprising a first step of preparing a long-shelf life intermediate composition comprising biomass of at least one biocontrol microorganism and a second step of preparing from said intermediate composition an end composition for direct application of said biocontrol agent to agricultural crops.

2. Method according to claim 1, further comprising storing said long - shelf-life intermediate composition in a frozen state.

3. Method according to claim 1 or claim 2, wherein said microorganism comprises an *Aureobasidium* species.

4. Method according to claim 3, wherein said microorganism comprises an *Aureobasidium pullulans* strain.

5. Method according to any one of claims 1-4, wherein said end composition is made by diluting said intermediate composition.

6. Method according to any one of claims 1-5, wherein said long ―shelf-life intermediate composition is prepared by a method comprising the steps of:
a) preparing biomass of at least one biocontrol microorganism by cultivation,
b) harvesting said biomass of said at least one biocontrol microorganism in a first dilutant to obtain a biomass suspension, and
c) freezing said biomass suspension,
and wherein said end composition for direct application is prepared by a method comprising the steps of:
d) thawing said long shelf-life intermediate composition, and
e) diluting said long shelf-life intermediate composition in a second dilutant prior to application, wherein said first and second dilutant may be the same or different.

7. Method according to claim 6, wherein said first dilutant is water.

8. Method according to claim 6 or claim 7, wherein said first dilutant comprises at least one viability preserving substance.

9. Method according to any one of claims 6-8, wherein said second dilutant comprises a germination stimulating compound.

10. Method according to any one of the preceding claims, wherein the shelf life of said long-shelf life intermediate composition comprises at least 6 months in a frozen state.

11. Method according to any one of the preceding claims, wherein the shelf life of said biomass suspension comprises at least 10 months in a frozen state.

12. A method according to any one of claims 1-11, wherein said biomass is stored in separate containers each containing an amount of said biomass suitable for a fixed amount of end composition.

13. A method according to claim 12, wherein a container comprises between 10⁹ and 10¹³ cells or conidia of *Aureobasidium.*

14. Composition comprising a biocontrol agent obtainable by a method according to any one of claims 1-13.

15. Composition according to claim 14, further comprising at least one adjuvant selected from the group comprising anti-oxidants, binders, dispersants or spreaders, emulsifiers, stabilizers, chelators, humectants, stickers and thickeners.

16. Composition according to claim 14 or claim 15, wherein said adjuvant is a dispersant, a binder and/or a surfactant.

17. A long shelf life composition comprising *Aureobasidium* cells in a frozen state with a viability of at least 80%.

18. A long shelf life composition comprising at least 10⁹ life conidia of *Aureobasidium* per milliliter in a frozen state.

19. A long shelf life composition according to claim 17 or 18 comprising at least one viability preserving substance.

20. Composition according to any one of the claims 14-19, for use as a biocontrol agent for treating and/or preventing botrytis growth on and/or in a plant.

21. Use of a composition according to any one of the claims 14-19, for the control of pests.

22. Use according to claim 21, wherein the pest is botrytis.

23. Method of delivering microorganisms to a plant to improve plant productivity, which comprises contacting a plant component with a composition according to any one of the claims 14-16.

24. Method according to claim 23, wherein said contacting is effectuated by spraying said composition on said plant component.
